# DEMANDE DE BREVET EUROPEEN

(11) **EP 1 982 850 A1**
(43) Date de publication de la demande: **22.10.2008**
(21) Numéro de dépôt: 08154681.4
(22) Date de dépôt: 17.04.2008
(51) Int. Cl.: B60C 23/06

(54) **Dispositif et procédé de contrôle de pression de pneumatiques d'un véhicule à l'aide d'inclinomètres**

(30) Priorité: 19.04.2007 FR 0754571
(71) Demandeur: Société de Technologie Michelin, 63000 Clermont-Ferrand (FR); MICHELIN Recherche et Technique S.A., 1763 Granges-Paccot (CH)
(72) Inventeur: Massoni, Sébastien, 63000 CLERMONT-FERRAND (FR); Rolland, Maxime, 63200 PESSAT-VILLENEUVE (FR)
(74) Mandataire: de la Bigne, Guillaume Michel Marie

(57) **Abrégé**

Le dispositif (12A, 12B) comprend des premier (IT1 ; IR1) et deuxième (IT2 ; IR2) inclinomètres, portés respectivement par des premier (T1 ; R1) et deuxième (T2 ; R2) essieux. Les inclinomètres sont destinés à mesurer un angle d'inclinaison, respectivement de premier et deuxième axes géométriques d'essieu passant par le centre des roues portées par chacun des essieux, autour d'un axe d'inclinaison (ITL ; IRL) parallèle à une première direction. Le dispositif (12A, 12B) comprend des moyens (18) de calcul aptes à calculer, sur un intervalle de temps donné, un vécu d'un angle d'inclinaison, dit vécu inclinométrique, notamment de chaque angle d'inclinaison des premier et deuxième axes d'essieu. Le dispositif comprend des moyens (20) de calcul d'un indicateur à partir d'au moins deux vécus inclinométriques, dit indicateur de déviation, l'indicateur permettant de comparer les vécus inclinométriques, notamment les vécus inclinométriques des angles d'inclinaison des premier et deuxième axes d'essieu.

## Description

La présente invention concerne un dispositif et un procédé de contrôle de pression de pneumatiques d'un véhicule, à l'aide d'inclinomètres.

Elle s'applique en particulier, mais non exclusivement, au contrôle de pression de pneumatiques d'un tracteur ou d'une remorque de véhicule de type poids lourd.

On comprendra par pression, la pression interne d'un pneumatique définie comme la force par unité de surface exercée par un gaz sur une surface interne d'un pneumatique.

Il est connu, notamment de US 2,155,903, de contrôler la pression de pneumatiques d'un véhicule au moyen d'un dispositif de contrôle indirect de cette pression.

Le véhicule décrit dans US 2,155,903 comprend des première et deuxième paires de roues. Les roues de chaque paire sont opposées transversalement (roues gauche et droite). Les première et deuxième paires de roues sont portées respectivement par des premier et deuxième essieux. Ces premier et deuxième essieux sont solidaires respectivement de premier et deuxième axes géométriques, dits axes d'essieu. Chaque axe d'essieu passe par les centres des roues de la paire correspondante.

Les premier et deuxième essieux portent respectivement des premier et deuxième inclinomètres. Ces premier et deuxième inclinomètres sont destinés chacun à mesurer, relativement à une direction longitudinale du véhicule, un angle d'inclinaison, respectivement des premier et deuxième axes d'essieu, autour d'un axe d'inclinaison parallèle à cette direction.

Le défaut de pression d'un pneumatique entraîne l'inclinaison de l'axe d'essieu portant ce pneumatique autour de l'axe d'inclinaison parallèle à la direction longitudinale du véhicule.

Le dispositif de contrôle décrit dans US 2,155,903 comprend des moyens relativement complexes comprenant des moyens électriques, mécaniques et thermiques couplés entre eux et reliés aux deux inclinomètres.

Le dispositif de contrôle de US 2,155,903 est relativement encombrant et requiert des inclinomètres spécifiques à l'application envisagée.

De plus le dispositif de contrôle de US 2,155,903 requiert des réglages fastidieux des moyens électriques, mécaniques et thermiques.

Enfin, les moyens électriques, mécaniques et thermiques du dispositif de contrôle de US 2,155,903 présentent une inertie relativement importante. Cette inertie a paradoxalement pour avantage d'éviter que les angles d'inclinaison varient sous l'effet du roulis intempestif des essieux dû à la chaussée, notamment au dévers de la chaussée, si bien que la détection de défauts de pression à partir des angles d'inclinaison n'est pas perturbée par le roulis intempestif des essieux.

L'invention a notamment pour but de proposer un dispositif de contrôle de pression de pneumatiques relativement standard et facile à installer sur un véhicule, notamment de type poids lourd, ceci en permettant une détection fiable d'un éventuel défaut de pression d'un pneumatique, cette détection n'étant pas perturbée par les variations d'inclinaison (notamment les variations du dévers) et les irrégularités de la chaussée.

A cet effet, l'invention a pour objet un dispositif de contrôle de pression de pneumatiques d'un véhicule comprenant :
- une première paire de roues, équipées chacune d'un pneumatique, opposées transversalement, portées par un premier essieu solidaire d'un axe géométrique, dit premier axe d'essieu, passant par les centres des roues de cette première paire, et
- une deuxième paire de roues, équipées chacune d'un pneumatique, opposées transversalement, portées par un second essieu solidaire d'un axe géométrique, dit second axe d'essieu, passant par les centres des roues de cette deuxième paire et sensiblement parallèle au premier axe d'essieu,
   le dispositif comprenant des premier et deuxième inclinomètres, portés respectivement par les premier et deuxième essieux, destinés chacun à mesurer, relativement à une première direction, un angle d'inclinaison, respectivement des premier et deuxième axes d'essieu, autour d'un axe d'inclinaison parallèle à cette première direction,
   le dispositif comprenant de plus :
- des moyens de calcul aptes à calculer, sur un intervalle de temps donné, un vécu d'un angle d'inclinaison, dit vécu inclinométrique, notamment des angles d'inclinaison des premier et deuxième axes d'essieu, et
- des moyens de calcul d'un indicateur à partir d'au moins deux vécus inclinométriques, dit indicateur de déviation, l'indicateur permettant de comparer les vécus inclinométriques, notamment les vécus inclinométriques des angles d'inclinaison des premier et deuxième axes d'essieu.

Les moyens de calcul d'un indicateur de vécu inclinométrique proposés par l'invention permettent la détection d'un défaut de pression à partir de cet indicateur que l'on choisira de façon à être relativement indépendant des effets du roulis ou du tangage intempestif des essieux (par exemple une moyenne des différences inclinomètriques), et à permettre ainsi une détection fiable de défauts de pression, non perturbée par le roulis ou le tangage intempestif des essieux, ceci même en utilisant des inclinomètres standards, tels que des inclinomètres à électrolyte, dont la réponse aux variations de l'angle d'inclinaison est rapide et sensible au roulis ou au tangage intempestif des essieux.

L'invention permet donc d'utiliser des inclinomètres standards pouvant être installés rapidement sur n'importe quel type de véhicule tel que défini ci-dessus, ceci bien que ces inclinomètres standards soient sensibles aux variations d'inclinaison (notamment aux variations du dévers) et aux irrégularités de la chaussée.

Le cas échéant le véhicule comprend une troisième paire de roues, équipées chacune d'un pneumatique, opposées transversalement, portées par un troisième essieu solidaire d'un axe géométrique, dit troisième axe d'essieu, passant par les centres des roues de cette troisième paire et sensiblement parallèle aux premier et deuxième axes d'essieu. Dans ce cas, le dispositif comprend un troisième inclinomètre, porté par le troisième essieu, destiné à mesurer un angle d'inclinaison du troisième axe d'essieu autour d'un axe d'inclinaison parallèle à la première direction.

Selon un mode de réalisation, au moins un inclinomètre est destiné à mesurer, relativement à une seconde direction, un angle d'inclinaison, de l'axe d'essieu portant l'inclinomètre, autour d'un axe d'inclinaison parallèle à cette seconde direction.

Avantageusement, la première direction correspond sensiblement à une direction longitudinale du véhicule et la seconde direction correspond sensiblement à une direction transversale du véhicule.

Les première et seconde directions ainsi choisies permettent d'obtenir une sensibilité maximale de mesure de chacun des inclinomètres. En effet, les directions longitudinale et transversale correspondant sensiblement aux directions autour desquelles l'axe d'essieu est susceptible de s'incliner suite à un défaut de pression d'un des pneumatiques portés par l'essieu, toute variation de l'angle d'inclinaison de l'axe d'essieu autour, soit de l'axe d'inclinaison parallèle à la direction longitudinale, soit de l'axe d'inclinaison parallèle à la direction transversale est sensiblement égale à l'angle mesuré par l'inclinomètre relativement à la direction soit longitudinale, soit transversale.

De façon optionnelle, le véhicule comprend au moins un bras de guidage reliant un essieu à un axe transversal de rotation lié à un châssis du véhicule, de façon que l'axe de cet essieu suspendu soit sensiblement parallèle à l'axe de rotation et puisse osciller autour de cet axe de rotation, l'axe de rotation formant axe d'inclinaison parallèle à la direction transversale pour l'inclinomètre porté par l'essieu suspendu.

La mesure, relativement à la direction transversale du véhicule, de l'angle d'inclinaison de l'axe d'essieu autour de l'axe de rotation est particulièrement pertinente. En effet, plus l'axe d'essieu est proche de l'axe de rotation, plus un défaut de pression de l'un des pneumatiques portés par l'essieu entraînera une oscillation importante de l'axe d'essieu autour de l'axe de rotation. Or, l'oscillation importante de l'axe d'essieu autour de l'axe de rotation entraîne un angle d'inclinaison de l'axe d'essieu autour de l'axe de rotation important. On accroît ainsi la sensibilité de mesure de chacun des angles relativement à la direction transversale.

Avantageusement, les essieux ne sont pas solidaires deux à deux.

Ainsi, on peut mesurer des inclinaisons indépendantes des axes d'essieux autour des première et seconde directions.

De préférence, au moins un inclinomètre est de type électrolytique.

Un inclinomètre de type électrolytique présente l'avantage d'être pratiquement insensible aux effets des vibrations de fréquences supérieures à 5Hz, voire 50 Hz.

De plus, un inclinomètre de ce type est généralement fiable et stable au cours du temps, ce qui limite les éventuelles opérations d'entretien. En outre, le faible coût d'un inclinomètre de ce type limite le coût du dispositif de contrôle comprenant l'inclinomètre.

Enfin, un inclinomètre de type électrolytique présente un encombrement réduit ce qui réduit l'encombrement du dispositif de contrôle dans le véhicule.

Avantageusement, le véhicule est une remorque ou un tracteur de véhicule de type poids lourd.

Dans le cas d'un véhicule de type poids lourd (tracteur et remorque), il est souhaitable de détecter très rapidement un pneumatique présentant un défaut de pression. En effet, un pneumatique de véhicule de type poids lourd étant soumis à une forte charge, un défaut de pression non détecté peut conduire à l'endommagement du pneumatique. Le dispositif selon l'invention est donc avantageux car il permet de détecter rapidement, en tout cas bien avant un éventuel endommagement du pneumatique, un défaut de pression.

Grâce au dispositif de contrôle selon l'invention, la pression des pneumatiques d'un véhicule de type poids lourd peut être suivie suffisamment si bien qu'il n'est pas nécessaire de doubler le nombre de pneumatiques sur chaque essieu pour pallier une éventuelle non détection d'un défaut de pression d'un pneumatique. Ainsi, chaque essieu pourra ne comporter, grâce à l'invention, que deux pneumatiques plutôt que quatre. Le cas échéant, le vécu inclinométrique d'un angle est une moyenne de mesures successives de cet angle calculée sur un premier intervalle de temps, et l'indicateur de déviation est une moyenne de différences des vécus inclinométriques calculée entre deux axes d'essieu relativement à une même direction sur un deuxième intervalle de temps.

L'invention a également pour objet un procédé de contrôle de pression de pneumatiques d'un véhicule au moyen d'un dispositif tel que défini ci-dessus, dans lequel :
- on calcule un vécu inclinométrique des angles d'inclinaison de deux axes d'essieu,
- on calcule un indicateur de déviation à partir d'au moins deux vécus inclinométriques, et
- lorsque la valeur de l'indicateur dépasse, en valeur absolue, un seuil non nul (ε), on détermine, à partir du signe de l'indicateur (λ_{Ti,j}, τ_{Ti,j}; λ_{Ri,j}, τ_{Ri,j}), un pneumatique en défaut de pression ou un ensemble de pneumatiques suspects.

Selon un premier mode de réalisation de l'invention, on calcule des premier, deuxième et troisième vécus inclinométriques relatifs à la première direction respectivement de l'angle d'inclinaison des premier, deuxième et troisième axes d'essieu. Dans ce cas, on calcule des premier, deuxième et troisième indicateurs de déviation, relatifs à la première direction, respectivement à partir :
- des premier et deuxième vécus inclinométriques,
- des deuxième et troisième vécus inclinométriques,
- des premier et troisième vécus inclinométriques.

Lorsque deux des indicateurs relatifs à la première direction, pris parmi les premier, deuxième et troisième indicateurs relatifs à la première direction, dépassent chacun, en valeur absolue, un seuil non nul,
o on détermine un ensemble de deux pneumatiques suspects à partir des deux indicateurs dépassant, en valeur absolue, le seuil non nul, et
o on détermine un pneumatique en défaut de pression parmi l'ensemble de deux pneumatiques suspects à partir d'un signe de l'un des deux indicateurs dépassant, en valeur absolue, le seuil non nul.
En variante,
o on détermine un ensemble de quatre pneumatiques suspects à partir d'un premier des deux indicateurs dépassant, en valeur absolue, le seuil non nul, et
o on détermine un pneumatique en défaut de pression parmi l'ensemble de quatre pneumatiques suspects à partir du signe du second des deux indicateurs dépassant, en valeur absolue, le seuil non nul.

Selon un second mode de réalisation de l'invention, on calcule d'une part, des premier et deuxième vécus inclinométriques relatifs à la première direction respectivement des angles d'inclinaison, relatifs à cette première direction, des premier et deuxième axes d'essieux. D'autre part, on calcule des premier et deuxième vécus inclinométriques relatifs à la seconde direction respectivement des angles d'inclinaison, relatifs à cette seconde direction, des premier et deuxième axes d'essieux. On calcule un indicateur de déviation relatif à la première direction, à partir des premier et deuxième vécus inclinométriques relatifs à la première direction, et un indicateur de déviation relatif à la seconde direction, à partir des premier et deuxième vécus inclinométriques relatifs à la seconde direction.

Lorsque chacun des deux indicateurs relatifs à la première et à la seconde direction, dépasse respectivement, en valeur absolue, un seuil non nul relatif à la première direction et un seuil non nul relatif à la seconde direction,
o on détermine un ensemble de deux pneumatiques suspects, à partir du signe d'un des deux indicateurs, appelé premier indicateur de référence, dépassant, en valeur absolue, le seuil non nul correspondant, et
o on détermine le pneumatique en défaut de pression parmi l'ensemble de deux pneumatiques suspects à partir du signe de l'autre des deux indicateur dépassant, en valeur absolue, le seuil non nul correspondant, appelé second indicateur de référence.

Selon un premier exemple conforme à ce second mode de réalisation du procédé, le premier indicateur de référence est l'indicateur relatif à la direction longitudinale du véhicule, l'ensemble de deux pneumatiques suspects comprenant deux pneumatiques, transversalement opposés, portés par deux essieux différents. Le second indicateur de référence est l'indicateur relatif à la direction transversale.

Selon un second exemple conforme à ce second mode de réalisation du procédé, le premier indicateur de référence est l'indicateur relatif à la direction transversale du véhicule, l'ensemble de deux pneumatiques suspects comprenant deux pneumatiques, transversalement opposés, portés par le même essieu. Le second indicateur de référence est l'indicateur relatif à la direction longitudinale.

L'invention sera mieux comprise à la lecture de la description qui va suivre, donnée uniquement à titre d'exemple non limitatif et faite en se référant aux dessins dans lesquels :
- la figure 1 est une vue schématique, dans un plan X, Z, d'un véhicule de type poids lourd muni de deux dispositifs selon des premier et second modes de réalisation de l'invention pour le contrôle de la pression de pneumatiques;
- la figure 2 est une vue schématique, dans un plan X, Y, de trois essieux d'un tracteur du véhicule de la figure 1 muni du dispositif selon le premier mode réalisation de l'invention;
- la figure 3 est une vue de détail, dans le plan X, Z, de deux essieux d'une remorque du véhicule de la figure 1 munie du dispositif selon le second mode de réalisation de l'invention;
- la figure 4 est une vue schématique, dans le plan Y, Z, des deux essieux représentés à la figure 3 portant un pneumatique en défaut de pression ;
- la figure 5 est une vue analogue à la figure 4 dans laquelle le pneumatique en défaut de pression est différent de celui en défaut de pression à la figure 4.

Sur les figures, on a représenté des axes X, Y, Z orthogonaux entre eux correspondant aux orientations habituelles longitudinale (X), transversale (Y) et verticale (Z) d'un véhicule.

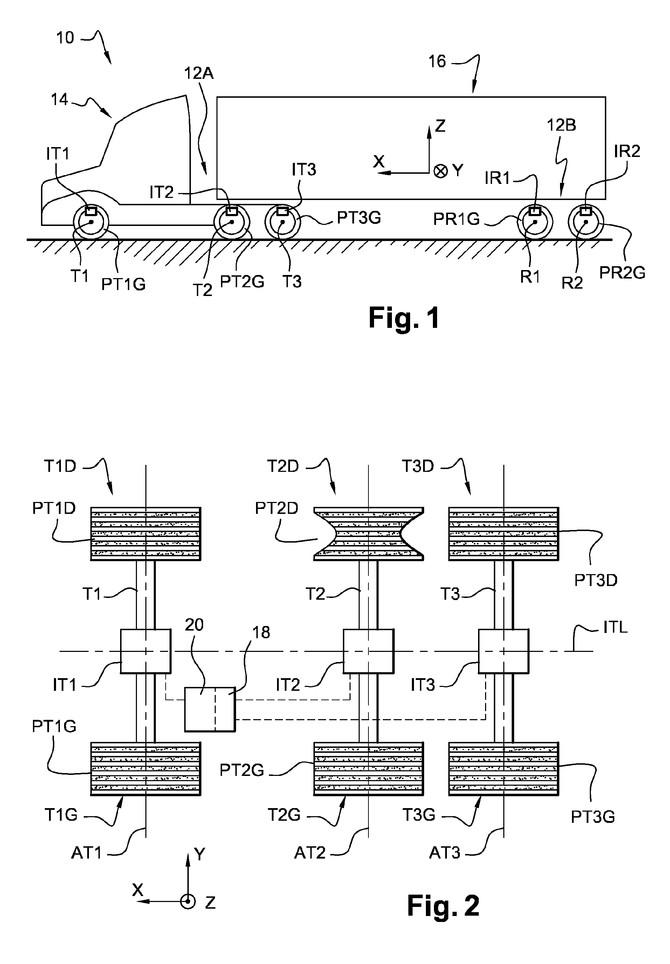

On a représenté sur la figure 1 un véhicule de type poids lourd 10 muni de deux dispositifs selon des premier et second modes de réalisation de l'invention désignés respectivement par les références 12A et 12B.

Le véhicule 10 comprend un tracteur 14 équipé du dispositif 12A selon le premier mode de réalisation et une remorque 16 équipée du dispositif 12B selon le second mode de réalisation.

Comme représenté sur les figures 1 et 2, le tracteur 14 comprend des premier, deuxième et troisième essieux respectivement désignés par les références T1, T2 et T3. Ces trois essieux ne sont pas solidaires deux à deux.

Le premier essieu T1 porte une première paire de roues opposées transversalement. Les roues droite et gauche porté par l'essieu T1 sont désignées respectivement par les référence T1 D et T1 G. Chaque roue T1 D, T1 G est équipée d'un pneumatique PT1D, PT1G. L'essieu T1 est solidaire d'un axe géométrique AT1, dit premier axe d'essieu. Cet axe géométrique AT1 passe par les centres des roues T1D, T1 G de la première paire.

Les éléments relatifs aux deuxième et troisième essieux T2, T3 sont désignés par des références qui se déduisent *mutatis mutandis à* partir des références des éléments relatif au premier essieu T1. Les axes d'essieu AT1, AT2 et AT3 sont sensiblement parallèles deux à deux.

Le dispositif 12A selon le premier mode de réalisation de l'invention comprend des premier, deuxième et troisième inclinomètres IT1, IT2 et IT3, portés respectivement par les premier, deuxième et troisième essieux T1, T2 et T3. Ces inclinomètres IT1, IT2 et IT3, également représentés schématiquement sur la figure 1, sont destinés chacun à mesurer, relativement à une première direction, un angle d'inclinaison, respectivement des premier, deuxième et troisième axes d'essieu AT1, AT2 et AT3, autour d'un axe d'inclinaison ITL parallèle à cette première direction. Dans l'exemple représenté à la figure 2, la première direction correspond sensiblement à une direction longitudinale du tracteur, parallèle à l'axe X.

Les inclinomètres IT1, IT2 et IT3 sont, de préférence, de type électrolytique.

Le dispositif 12A comprend, de plus, des moyens 18 de calcul, aptes à calculer, sur un intervalle de temps donné Δ₁, un vécu d'un angle d'inclinaison, dit vécu inclinométrique. L'angle d'inclinaison est pris parmi les angles d'inclinaison des premier, deuxième et troisième axes d'essieu AT1, AT2 et AT3, autour de l'axe d'inclinaison ITL parallèle à la direction longitudinale du véhicule. Chaque vécu inclinométrique correspondant à chaque angle d'inclinaison des premier, deuxième et troisième axes d'essieu AT1, AT2 et AT3 est respectivement noté VL1, VL2 et VL3.

Aussi, le dispositif 12A comprend des moyens 20 de calcul d'un indicateur, dit indicateur de déviation, à partir d'au moins deux vécus inclinométriques. Dans l'exemple décrit, le vécu inclinométrique d'un angle est une moyenne de mesures successives de cet angle calculée sur l'intervalle de temps Δ₁, et l'indicateur de déviation est une moyenne de différences des vécus inclinométriques calculée entre deux axes d'essieu relativement à une même direction sur un deuxième intervalle de temps Δ₂.

Les intervalles de temps Δ₁ et Δ₂ sont choisis suffisamment longs de façon que l'indicateur indique, de façon fiable, un éventuel défaut de pression d'un pneumatique. Cependant, les intervalles de temps Δ₁ et Δ₂ sont choisis suffisamment courts pour indiquer relativement rapidement un éventuel défaut de pression d'un pneumatique. En l'espèce, Δ₁ est égal à 30 secondes et Δ₂ est égal à 15 minutes.

Le dispositif 12A selon le premier mode de réalisation de l'invention permet de mettre en oeuvre un procédé selon un premier mode de réalisation dont les principales étapes vont à présents être décrites.

Dans ce premier mode de réalisation, on calcule des premier, deuxième et troisième vécus inclinométriques V1 L, VL2, VL3 relatifs à la direction longitudinale.

Le premier vécu inclinométrique VL1 est le vécu inclinométrique de l'angle, relatif à la direction longitudinale, du premier axe d'essieu AT1. Le deuxième vécu inclinométrique VL2 est le vécu inclinométrique de l'angle, relatif à la direction longitudinale, du deuxième axe d'essieu AT2. Le troisième vécu inclinométrique VL3 est le vécu inclinométrique de l'angle, relatif à la direction longitudinale, du troisième axe d'essieu AT3.

Afin de détecter un éventuel défaut de pression de l'un des pneumatiques portés par les essieux T1, T2 et T3, on calcule des premier, deuxième et troisième indicateurs de déviation relatifs à la première direction, respectivement désignés par λ_{T1,2}, λ_{T2,3} et λ_{T1,3}, respectivement à partir des premier et deuxième vécus inclinométriques VL1, VL2, des deuxième et troisième vécus inclinométriques VL2, VL3, et des premier et troisième vécus inclinométriques VL1, VL3.

De façon générale, on désignera λ_{Ti,j} l'indicateur de déviation calculé à partir des vécus inclinométriques, relatifs à la direction longitudinale, des angles des axes d'essieux i et j.

Lorsque deux des indicateurs λ_{T1,2}, λ_{T2,3}, λ_{T1,3}, dépassent chacun, en valeur absolue, un seuil non nul ε_{L}, on détermine un ensemble de deux pneumatiques suspects à partir des deux indicateurs dépassant, en valeur absolue, le seuil non nul ε_{L}. On choisira le seuil ε_{L} de façon à obtenir une sensibilité souhaitée de détection d'un défaut de pression.

Dans l'exemple représenté à la figure 2, les indicateurs λ_{T1,2} et λ_{T2,3} dépassent chacun, en valeur absolue, le seuil ε_{L}. L'indicateur λ_{T1,3} ne dépasse pas, en valeur absolue, le seuil ε_{L}. L'ensemble de deux pneumatiques suspects est donc formé par les deux pneumatiques portés par l'essieu commun aux deux indicateurs λ_{T1,2} et λ_{T2,3}, c'est-à-dire l'essieu T2. Les deux pneumatiques suspects sont donc PT2D et PT2G.

On détermine un pneumatique en défaut de pression parmi l'ensemble de deux pneumatiques suspects à partir d'un signe de l'un des deux indicateurs λ_{T1,2} et λ_{T2,3} dépassant, en valeur absolue, le seuil non nul ε_{L}.

En effet, lors de l'installation du dispositif 12A sur le tracteur 14, on a réglé les inclinomètres IT1 et IT2 de façon que si l'indicateur λ_{T1,2} est positif, les pneumatiques T1 D et T2G forment l'ensemble de deux pneumatiques suspects. A l'inverse, si l'indicateur λ_{T1,2} est négatif, les pneumatiques PT1G et PT2D forment l'ensemble de deux pneumatiques suspects. De façon analogue, on a réglé l'inclinomètre IT3 de façon que si λ_{T2,3} est positif, les pneumatiques PT2D et PT3G forment l'ensemble de deux pneumatiques suspects, et que si λ_{T2,3} est négatif, les pneumatiques PT2G et PT3D forment l'ensemble de deux pneumatiques suspects. Enfin, si l'indicateur λ_{T1,3} est positif, les pneumatiques PT1 D et PT3G forment l'ensemble de deux pneumatiques suspects et, si λ_{T1,3} est négatif, les pneumatiques PT1G et PT3D forment l'ensemble de deux pneumatiques suspects.

Dans l'exemple représenté à la figure 2, le signe de λ_{T1,2} est négatif. Donc, le pneumatique en défaut sur l'essieu T2 est le pneumatique PT2D. On notera que l'on aurait pu déterminer le pneumatique en défaut à partir du signe de λ_{T2,3}. En effet, le signe de λ_{T2,3} étant positif, le pneumatique en défaut sur l'essieu T2 est bien le pneumatique PT2D.

Selon une variante du premier mode de réalisation du procédé de l'invention, on détermine un ensemble de quatre pneumatiques suspects à partir d'un premier des deux indicateurs λ_{T1,2} et λ_{T2,3} dépassant , en valeur absolue, le seuil ε_{L}.

Ainsi, dans l'exemple représenté à la figure 2, comme l'indicateur λ_{T1,2} dépasse, en valeur absolue, le seuil ε_{L}, le pneumatique en défaut de pression se trouve soit sur l'essieu T1, soit sur l'essieu T2.

On détermine un pneumatique en défaut de pression parmi l'ensemble des quatre pneumatiques portés par les essieux T1 et T2 à partir d'un signe du second des deux indicateurs dépassant, en valeur absolue, le seuil ε_{L} non nul.

Le signe de λ_{T2,3} étant positif et le pneumatique en défaut de pression se trouvant soit sur l'essieu T1, soit sur l'essieu T2, le pneumatique en défaut de pression est donc PT2D.

On décrira maintenant, en se référant aux figures 1 et 3 à 5, le dispositif 12B selon le second mode de réalisation de l'invention. Dans ce cas, les éléments analogues au dispositif 12A selon le premier mode de réalisation sont désignés par des références identiques.

Comme représenté sur les figures 1 et 3 à 5, la remorque 16 comprend des premier et deuxième essieux respectivement désignés par les références R1 et R2. Ces deux essieux R1, R2 ne sont pas solidaires entre eux.

Le premier essieu R1 porte une première paire de roues opposées transversalement. Les roues droite et gauche portées par l'essieu R1 sont désignées respectivement par les référence R1 D et R1G. Chaque roue R1 D, R1 G est équipée d'un pneumatique PR1D, PR1G. L'essieu R1 est solidaire d'un axe géométrique AR1, dit premier axe d'essieu. Cet axe géométrique AR1 passe par les centres des roues R1D, R1 G de la première paire.

Les éléments relatifs au deuxième essieu R2 sont désignés par des références qui se déduisent *mutatis mutandis* à partir des références des éléments relatif au premier essieu R1. Les axes d'essieu RT1 et RT2 sont sensiblement parallèles entre eux.

Le dispositif 12B comprend des premier et deuxième inclinomètres IR1, IR2, portés respectivement par les premier et deuxième essieux R1 et R2.

Chaque inclinomètre IR1, IR2, également représenté schématiquement sur la figure 1, est destiné, comme dans le premier mode de réalisation, à mesurer, relativement à la direction longitudinale, un angle d'inclinaison, de l'axe d'essieu portant l'inclinomètre, autour d'un axe d'inclinaison IRL parallèle à la direction longitudinale de la remorque.

Toutefois, dans ce second mode de réalisation, chaque inclinomètre IR1, IR2 est également destiné à mesurer, relativement à une seconde direction, un angle d'inclinaison α, de l'axe d'essieu portant l'inclinomètre, autour d'un axe d'inclinaison IRT parallèle à cette seconde direction. Dans le cas représenté aux figures 1 et 3 à 5, la seconde direction correspond sensiblement à une direction transversale du véhicule, parallèle à l'axe Y.

Les inclinomètres IR1 et IR2 sont, de préférence, de type électrolytique.

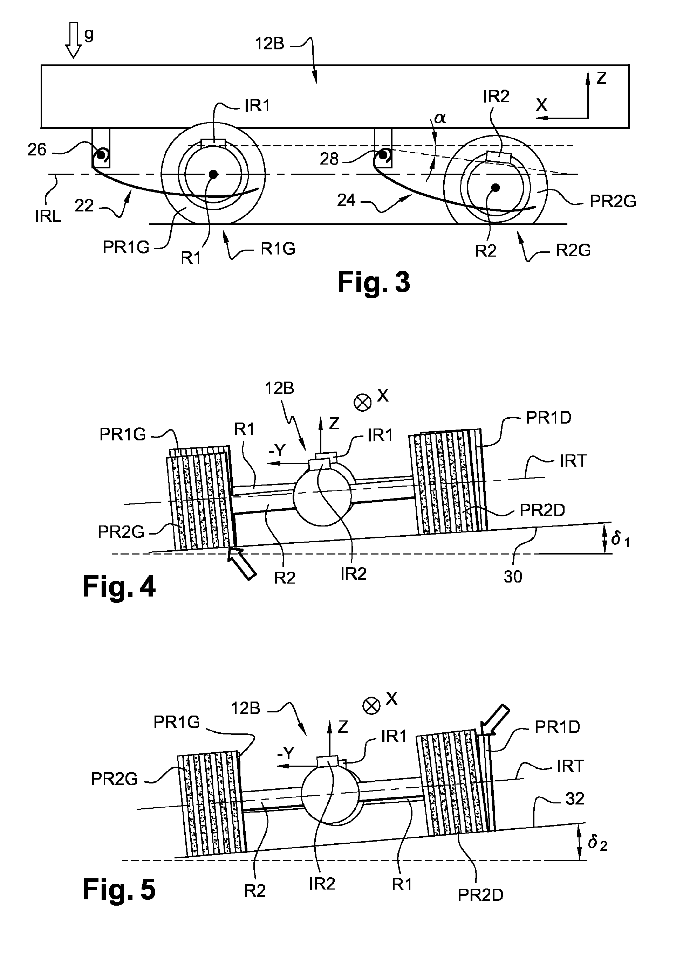

Comme représenté plus en détail à la figure 3, la remorque comprend deux bras de guidage 22 et 24 reliant respectivement les essieux R1 et R2 au châssis. Chaque bras de guidage 22, 24 relie chaque essieu R1, R2 à un axe de rotation transversal 26, 28 lié à un châssis du véhicule 16. En l'espèce, chaque bras de guidage 22, 24 est formé d'une demi lame. Chaque bras de guidage peut aussi utiliser des bras multiples. De cette façon, les axes d'essieu AR1 et AR2 sont suspendus et sensiblement parallèles respectivement aux axes de rotation 26 et 28. Chacun des axes AR1 et AR2 peut ainsi osciller autour des axes 26 et 28. Chacun des axes 26 et 28 forme donc, pour chaque inclinomètre IR1 et IR2 porté par chacun des essieux suspendus R1 et R2, l'axe d'inclinaison IRT parallèle à la direction transversale de la remorque.

Le dispositif 12B selon le second mode de réalisation de l'invention permet de mettre en oeuvre un procédé selon un second mode de réalisation de l'invention dont les principales étapes vont à présents être décrites.

Grâce aux moyens de calcul 18 d'un vécu inclinométrique et aux moyens de calcul 20 d'un indicateur, on calcule des premier et deuxième vécus inclinométriques VL1, VL2 relatifs à la direction longitudinale de la remorque, des angles d'inclinaison, relatifs à cette direction longitudinale, des premier et deuxième axes d'essieu AR1, AR2. On calcule également des premier et deuxième vécus inclinométriques VT1, VT2 relatifs à la direction transversale de la remorque, des angles d'inclinaison, relatifs à cette direction transversale, des premier et deuxième axes d'essieux AR, AR2.

A partir des premier et deuxième vécus inclinométriques VL1, VL2 relatifs à la direction longitudinale, on calcule un indicateur de déviation relatif à la direction longitudinale, désigné par λ_{R}. On calcule également un indicateur de déviation, relatif à la direction transversal, à partir des premier et deuxième vécus inclinométriques VT1, VT2 relatifs à la direction transversale, désigné par τ_{R}.

De façon analogue à la désignation des indicateurs λ_{R}, on notera τ_{Ri,j} l'indicateur de déviation calculé à partir des vécus inclinométriques, relatifs à la direction transversale, des angles des axes d'essieux i et j.

Dans le cas d'un défaut de pression d'un pneumatique, l'axe d'essieu portant ce pneumatique en défaut forme un angle autour des axes d'inclinaison IRL et IRT respectivement parallèles au directions longitudinale et transversale de la remorque 16.

Lorsque l'indicateur relatif à la direction longitudinale λ_{R1,2} dépasse, en valeur absolue, le seuil non nul ε_{L} relatif à la direction longitudinale, et lorsque l'indicateur relatif à la direction transversale τ_{R1,2} dépasse, en valeur absolue, un seuil non nul ε_{T} relatif à la direction transversale, on détermine, tout d'abord, un ensemble de deux pneumatiques suspects, à partir du signe d'un des deux indicateurs, appelé premier indicateur de référence, dépassant, en valeur absolue, le seuil ε_{L} ou ε_{T} correspondant.

En l'espèce, le premier indicateur de référence est l'indicateur λ_{R1,2} relatif à la direction longitudinale du véhicule.

Le signe de λ_{R1,2} est insuffisant pour déterminer le pneumatique défectueux comme le montrent les exemples des figures 4 et 5. Sur ces figures 4 et 5, on a représenté les deux essieux R1 et R2 circulant respectivement sur des chaussées 30 et 32. Ces chaussées 30 et 32 présentent des angles d'inclinaison différents par rapport à l'horizontale et respectivement désignés par les références δ₁ et δ₂.

Dans le cas représenté à la figure 4, le pneumatique PR2D est en défaut de pression. Dans le cas représenté à la figure 5, le pneumatique PR1G est en défaut de pression. Pourtant, dans les deux cas, l'indicateur λ_{R1,2} est le même.

Dans le cas représenté à la figure 3, l'ensemble de deux pneumatiques suspects comprend donc deux pneumatiques, transversalement opposés portés par deux essieux différents. En l'espèce, comme λ_{R1,2} est positif l'ensemble comprend les pneumatiques PR1 D et PR2G.

On détermine le pneumatique en défaut de pression parmi l'ensemble de deux pneumatiques suspects PR1D et PR2G à partir du signe du second indicateur de référence τ_{R1,2} dépassant, en valeur absolue, le seuil ε_{T} correspondant.

En effet, lors de l'installation du dispositif 12B sur la remorque 16, on a réglé les inclinomètres IR1 et IR2 de façon analogue aux inclinomètres IT1 et IT2. De plus, on a réglé les inclinomètres IR1 et IR2 de façon que si l'indicateur τ_{R1,2} est positif, les pneumatiques PR2D et PR2G forment l'ensemble de deux pneumatiques suspects. A l'inverse, si l'indicateur τ_{R1,2} est négatif, les pneumatiques PR1G et PR1D forment l'ensemble de deux pneumatiques suspects.

Comme dans l'exemple décrit τ_{R1,2} est positif, le pneumatique en défaut est le pneumatique R2G, comme cela est représenté sur la figure 3.

Selon une variante du second mode réalisation du procédé de l'invention, le premier indicateur de référence est l'indicateur τ_{R1,2} relatif à la direction transversale et le second indicateur de référence est l'indicateur λ_{R1,2} relatif à la direction longitudinale.

L'ensemble de deux pneumatiques suspects comprend donc deux pneumatiques, transversalement opposés portés par le même essieu. En l'espèce, comme τ_{R1,2} est positif, les deux pneumatiques suspects sont ceux portés par l'essieu R2.

De plus, comme λ_{R1,2} est positif, le pneumatique en défaut de pression est le pneumatique PR2G.

Dans les premier et second modes de réalisation, le dispositif 12A, 12B permet de détecter un défaut de pression d'un pneumatique de l'ordre de 30 % par rapport à une pression recommandée. Un tel défaut de pression correspond à un indicateur de déviation λ_{T}, λ_{R}, τ_{R} environ égal à 0,3° en valeur absolue, soit une surflèche du pneumatique en défaut de pression d'environ 10 mm.

On notera que les procédés selon les premier et second modes de réalisation de l'invention, ainsi que leurs variantes, comportent des étapes communes.

En effet, dans tous les modes, on calcule un vécu inclinométrique des angles d'inclinaison de deux axes d'essieu. On calcule également un indicateur de déviation à partir d'au moins deux vécus inclinométriques.

Lorsque la valeur de l'indicateur dépasse, en valeur absolue, le seuil ε, on détermine, en fonction du signe de l'indicateur, un pneumatique en défaut de pression ou un ensemble de pneumatiques suspects comprenant ce pneumatique en défaut de pression.

L'invention ne se limite pas aux modes de réalisation précédemment décrits.

En effet, dans le premier mode de réalisation, si les trois essieux T1, T2 et T3 portent des inclinomètres destinés à mesurer un angle relativement à la direction transversale et si ils sont suspendus conformément aux essieux R1 et R2, alors on peut contrôler la pression des pneumatiques portés par les essieux T1, T2 et T3 grâce à l'inclinaison des axes d'essieux relativement à la direction transversale du véhicule.

Le procédé correspondant utiliserait alors les indicateurs τ_{T1,2}, τ_{T1,3} et τ_{T2,3}.

De plus, les trois essieux T1, T2 et T3 pourraient porter des inclinomètres destinés à mesurer chacun deux angles d'inclinaison relatif à la direction longitudinale et transversale. On mettrait alors en oeuvre, simultanément les procédés de détection selon les premier et second modes de réalisation. Le signal de détection de défaut de pression d'un pneumatique serait alors déclenché par le procédé détectant le plus rapidement un défaut de pression.

## Revendications

1. Dispositif (12A, 12B) de contrôle de pression de pneumatiques d'un véhicule (10, 14, 16) comprenant :
- une première paire de roues, équipées chacune d'un pneumatique, opposées transversalement, portées par un premier essieu (T1 ; R1) solidaire d'un axe géométrique, dit premier axe d'essieu (AT1 ; AR1), passant par les centres des roues de cette première paire, et
- une deuxième paire de roues, équipées chacune d'un pneumatique, opposées transversalement, portées par un second essieu (T2 ; R2) solidaire d'un axe géométrique, dit second axe d'essieu (AT2 ; AR2), passant par les centres des roues de cette deuxième paire et sensiblement parallèle au premier axe d'essieu (AT1 ; AR1),
le dispositif (12A, 12B) comprenant des premier (IT1 ; IR1) et deuxième (IT2 ; IR2) inclinomètres, portés respectivement par les premier (T1 ; R1) et deuxième (T2 ; R2) essieux, destinés chacun à mesurer, relativement à une première direction, un angle d'inclinaison, respectivement des premier et deuxième axes d'essieu, autour d'un axed'inclinaison (ITL ; IRL) parallèle à cette première direction,
le dispositif (12A, 12B) comprenant de plus :
- des moyens (18) de calcul aptes à calculer, sur un intervalle de temps donné, un vécu (VL1, VL2, VL3; VT1, VT2) d'un angle d'inclinaison, dit vécu inclinométrique, notamment des angles d'inclinaison des premier et deuxième axes d'essieu, et
- des moyens (20) de calcul d'un indicateur (λ_{Ti,j}, τ_{Ti,j}; λ_{Ri,j}, τ_{Ri,j}) à partir d'au moins deux vécus inclinométriques (VL1, VL2, VL3; VT1, VT2), dit indicateur de déviation, l'indicateur permettant de comparer les vécus inclinométriques, notamment les vécus inclinométriques (VL1, VL2, VL3; VT1, VT2) des angles d'inclinaison des premier et deuxième axes d'essieu.

2. Dispositif (12A) selon la revendication 1, dans lequel, le véhicule (10, 14, 16) comprenant :
- une troisième paire de roues, équipées chacune d'un pneumatique, opposées transversalement, portées par un troisième essieu (T3) solidaire d'un axe géométrique, dit troisième axe d'essieu (AT3), passant par les centres des roues de cette troisième paire et sensiblement parallèle aux premier (AT1) et deuxième (AT2) axes d'essieu,*
le dispositif (12A) comprend un troisième inclinomètre (IT3), porté par le troisième essieu (T3), destiné à mesurer un angle d'inclinaison du troisième axe d'essieu (AT3) autour d'un axe d'inclinaison (ITL) parallèle à la première direction.

3. Dispositif (12B) selon la revendication 1, dans lequel au moins un inclinomètre (IR1, IR2) est destiné à mesurer, relativement à une seconde direction, un angle d'inclinaison (α), de l'axe d'essieu portant l'inclinomètre, autour d'un axe d'inclinaison (IRT) parallèle à cette seconde direction.

4. Dispositif (12A, 12B) selon la revendication 3, dans lequel la première direction correspond sensiblement à une direction longitudinale du véhicule et la seconde direction correspond sensiblement à une direction transversale du véhicule.

5. Dispositif (12B) selon la revendication 4, le véhicule (10, 14, 16) comprenant au moins un bras de guidage (22, 24) reliant un essieu (R1, R2) à un axe transversal (26, 28) de rotation lié à un châssis du véhicule, de façon que l'axe (AR1, AR2) de cet essieu suspendu soit sensiblement parallèle à l'axe de rotation (26, 28) et puisse osciller autour de cet axe de rotation (26, 28), l'axe de rotation (26, 28) formant axe d'inclinaison (IRT) parallèle à la direction transversale pour l'inclinomètre porté par l'essieu suspendu.

6. Dispositif (12A, 12B) selon l'une quelconque des revendications précédentes, dans lequel les essieux (T1, T2, T3 ; R1, R2) ne sont pas solidaires deux à deux.

7. Dispositif (12A, 12B) selon l'une quelconque des revendications précédentes, dans lequel au moins un inclinomètre (IT1, IT2, IT3 ; IR1, IR2) est de type électrolytique.

8. Dispositif (12A, 12B) selon l'une quelconque des revendications précédentes, dans lequel le véhicule (10, 14, 16) est une remorque (16) ou un tracteur (14) de véhicule de type poids lourd (10).

9. Dispositif (12A, 12B) selon l'une quelconque des revendications précédentes, dans lequel :
- le vécu inclinométrique (VL1, VL2, VL3 ; VT1, VT2) d'un angle est une moyenne de mesures successives de cet angle calculée sur un premier intervalle de temps (Δ₁), et
- l'indicateur de déviation (λ_{Ti,j}, τ_{Ti,j}; λ_{Ri,j}, τ_{Ri,j}) est une moyenne de différences des vécus inclinométriques (VL1, VL2, VL3 ; VT1, VT2) calculée entre deux axes d'essieu relativement à une même direction sur un deuxième intervalle de temps (Δ₂).

10. Procédé de contrôle de pression de pneumatiques d'un véhicule (10, 14, 16) au moyen d'un dispositif (12A, 12B) selon l'une quelconque des revendications précédentes, dans lequel :
- on calcule un vécu inclinométrique (VL1, VL2, VL3 ; VT1, VT2) des angles d'inclinaison de deux axes d'essieu (AT1, AT2, AT3 ; AR1, AR2),
- on calcule un indicateur de déviation (λ_{Ti,j}, τ_{Ti,j}; λ_{Ri,j}, τ_{Ri,j}) à partir d'au moins deux vécusinclinométriques (VL1, VL2, VL3 ; VT1, VT2), et
- lorsque la valeur de l'indicateur (λ_{Ti,j}, τ_{Ti,j}; λ_{Ri,j}, τ_{Ri,j}) dépasse, en valeur absolue, un seuil non nul (ε_{L}, ε_{T}), on détermine, à partir du signe de l'indicateur (λ_{Ti,j}, τ_{Ti,j}; λ_{Ri,j}, τ_{Ri,j}), un pneumatique en défaut de pression ou un ensemble de pneumatiques suspects.

11. Procédé selon la revendication 10 pour le contrôle de pression de pneumatiques d'un véhicule (14) au moyen d'un dispositif (12A) selon la revendication 2, dans lequel :
- on calcule des premier, deuxième et troisième vécus inclinométriques (VL1, VL2, VL3) relatifs à la première direction respectivement de l'angle d'inclinaison des premier, deuxième et troisième axes d'essieu (AT1, AT2, AT3),
- on calcule des premier, deuxième et troisième indicateurs (λ_{T1,2}, λ_{T2,3}, λ_{T1,3}) de déviation, relatifs à la première direction, respectivement à partir
o des premier et deuxième vécus inclinométriques (VL1, VL2),
o des deuxième et troisième vécus inclinométriques (VL2, VL3),
o des premier et troisième vécus inclinométriques (VL1, VL3), et
- lorsque deux des indicateurs (λ_{T1,2}, λ_{T2,3}, λ_{T1,3}) relatifs à la première direction, pris parmi les premier, deuxième et troisième indicateurs (λ_{T1,2}, λ_{T2,3}, λ_{T1,3}) relatifs à la première direction, dépassent chacun, en valeur absolue, un seuil non nul (ε_{L}),
o on détermine un ensemble de deux pneumatiques suspects à partir des deux indicateurs (λ_{T1,2}, λ_{T2,3}, λ_{T1,3}) dépassant, en valeur absolue, le seuil non nul (ε_{L}), et
o on détermine un pneumatique en défaut de pression parmi l'ensemble de deux pneumatiques suspects à partir d'un signe de l'un des deux indicateurs (λ_{T1,2}, λ_{T2,3}, λ_{T1,3}) dépassant, en valeur absolue, le seuil non nul (ε_{L}).

12. Procédé selon la revendication 10 pour le contrôle de pression de pneumatiques d'un véhicule (14) au moyen d'un dispositif (12A) selon la revendication 2, dans lequel :
- on calcule des premier, deuxième et troisième vécus inclinométriques (VL1, VL2, VL3) relatifs à la première direction respectivement des angles d'inclinaison des premier, deuxième et troisième axes d'essieu (AT1, AT2, AT3),
- on calcule des premier, deuxième et troisième indicateurs (λ_{T1,2}, λ_{T2,3}, λ_{T1,3}) de déviation, relatifs à la première direction, respectivement à partir
o des premier et deuxième vécus inclinométriques (VL1, VL2),
o des deuxième et troisième vécus inclinométriques (VL2, VL3),
o du premier et troisième vécus inclinométriques (VL1, VL3), et
- lorsque deux des indicateurs (λ_{T1,2}, λ_{T2,3}, λ_{T1,3}) relatifs à la première direction, pris parmi les premier, deuxième et troisième indicateurs (λ_{T1,2}, λ_{T2,3}, λ_{T1,3}) relatifs à la première direction, dépassent chacun, en valeur absolue, un seuil non nul (ε_{L}),
o on détermine un ensemble de quatre pneumatiques suspects à partir d'un premier des deux indicateurs (λ_{T1,2}, λ_{T2,3}, λ_{T1,3}) dépassant, en valeur absolue, le seuil non nul (ε_{L}), et
o on détermine un pneumatique en défaut de pression parmi l'ensemble de quatre pneumatiques suspects à partir du signe du second des deux indicateurs (λ_{T1,2}, λ_{T2,3}, λ_{T1,3}) dépassant, en valeur absolue, le seuil non nul (ε_{L}).

13. Procédé selon la revendication 10 pour le contrôle de pression de pneumatiques d'un véhicule (14) au moyen d'un dispositif (12B) selon la revendication 3, dans lequel :
- on calcule des premier et deuxième vécus inclinométriques (VL1, VL2) relatifs à la première direction respectivement des angles d'inclinaison, relatifs à cette première direction, des premier et deuxième axes d'essieux (AR1, AR2),
- on calcule des premier et deuxième vécus inclinométriques (VT1, VT2) relatifs à la seconde direction respectivement des angles d'inclinaison, relatifs à cette seconde direction, des premier et deuxième axes d'essieux (AR1, AR2),
- on calcule un indicateur de déviation (λ_{R1,2}, τ_{R1,2}) relatif à la première direction, à partir des premier et deuxième vécus inclinométriques (VL1, VL2) relatifs à la première direction, et
- on calcule un indicateur de déviation (λ_{R1,2}, τ_{R1,2}), relatif à la seconde direction, à partir des premier et deuxième vécus inclinométriques (VT1, VT2) relatifs à la seconde direction, et
- lorsque chacun des deux indicateurs (λ_{R1,2}, τ_{R1,2}) relatifs à la première et à la seconde direction, dépasse respectivement, en valeur absolue, un seuil non nul (ε_{L}) relatif à la première direction et un seuil non nul (ε_{T}) relatif à la seconde direction,
o on détermine un ensemble de deux pneumatiques suspects, à partir du signe d'un des deux indicateurs (λ_{R1,2}, τ_{R1,2}), appelé premier indicateur de référence, dépassant, en valeur absolue, le seuil non nul (ε_{L}, ε_{T}) correspondant, et
o on détermine le pneumatique en défaut de pression parmi l'ensemble de deux pneumatiques suspects à partir du signe de l'autre des deux indicateurs (λ_{R1,2}, τ_{R1,2}) dépassant, en valeur absolue, le seuil non nul (ε_{T}, ε_{L}) correspondant, appelé second indicateur de référence.

14. Procédé selon la revendication 13 pour le contrôle de pression de pneumatiques d'un véhicule (16) au moyen d'un dispositif (12B) selon la revendication 4, dans lequel :
o le premier indicateur de référence est l'indicateur (λ_{R1,2}) relatif à la direction longitudinale du véhicule, l'ensemble de deux pneumatiques suspects comprenant deux pneumatiques, transversalement opposés, portés par deux essieux différents,
o le second indicateur de référence est l'indicateur (τ_{R1,2}) relatif à la direction transversale.

15. Procédé selon la revendication 13 pour le contrôle de pression de pneumatiques d'un véhicule (16) au moyen d'un dispositif (12B) selon la revendication 4, dans lequel :
o le premier indicateur de référence est l'indicateur (τ_{R1,2}) relatif à la direction transversale du véhicule, l'ensemble de deux pneumatiques suspects comprenant deux pneumatiques, transversalement opposés, portés par le même essieu,
o le second indicateur de référence est l'indicateur (λ_{R1,2}) relatif à la direction longitudinale.
